# EUROPEAN PATENT APPLICATION

(11) **EP 4 657 244 A1**
(43) Date of publication of application: **03.12.2025**
(21) Application number: 24830714.2
(22) Date of filing: 24.06.2024
(51) Int. Cl.: G06F 8/61

(54) **METHOD FOR RESTORING APPLICATION PROGRAM, AND RELATED APPARATUS**

(30) Priority: 30.06.2023 CN 202310802072; 26.07.2023 CN 202310928660
(71) Applicant: Huawei Technologies Co., Ltd., Shenzhen, Guangdong 518129 (CN)
(72) Inventor: YU, Chunlei, Shenzhen, Guangdong 518129 (CN); WANG, Zhengqian, Shenzhen, Guangdong 518129 (CN); SUN, Leping, Shenzhen, Guangdong 518129 (CN); WANG, Qi, Shenzhen, Guangdong 518129 (CN); QIAN, Weichen, Shenzhen, Guangdong 518129 (CN); WU, Chao, Shenzhen, Guangdong 518129 (CN)
(74) Representative: Maiwald GmbH
(86) International application number: PCT/CN2024/101102
(87) International publication number: WO 2025/002072

(57) **Abstract**

This application provides an application restoration method and an electronic device. The application restoration method is applied to a terminal device, and includes: displaying a first icon and a second icon on a home screen of the terminal device, where the first icon is an icon of a first application, and the second icon is an icon of a first service widget; uninstalling the first application in response to an operation instruction entered by a user for uninstalling the first application; displaying a landing page of the first service widget and displaying a first control in response to a first operation entered by the user for tapping the second icon; and installing the first application in response to tapping the first control by the user. According to the method, the first application uninstalled by the user can be quickly restored, to improve user experience.

## Description

This application claims priorities to Chinese Patent Application No. 202310802072.7, filed with the China National Intellectual Property Administration on June 30, 2023 and entitled "WIDGET RECALL METHOD AND ELECTRONIC DEVICE", and to Chinese Patent Application No. 202310928660.5, filed with the China National Intellectual Property Administration on July 26, 2023 and entitled "APPLICATION RESTORATION METHOD AND RELATED APPARATUS", both of which are incorporated herein by reference in their entireties.

### TECHNICAL FIELD

This application relates to the field of terminal devices, and in particular, to an application restoration method and a related apparatus.

### BACKGROUND

An application (application, APP) is usually installed on a terminal device. In a process of using the terminal device, a user may need to restore the application after uninstalling the application.

Therefore, how to restore the uninstalled application on the terminal device becomes a technical problem to be urgently resolved.

### SUMMARY

This application provides an application restoration method and a related apparatus, to quickly restore an application uninstalled by a user, so as to improve user experience.

According to a first aspect, this application provides an application restoration method, applied to a terminal device, and including: displaying a first icon and a second icon on a home screen of a terminal device, where the first icon is an icon of a first application, and the second icon is an icon of a first service widget; and uninstalling the first application in response to an operation instruction entered by a user for uninstalling the first application; displaying a landing page of the first service widget and displaying a first control in response to a first operation entered by the user for tapping the second icon; and installing the first application in response to tapping the first control by the user.

Specifically, the first service widget may be considered as a service widget that can provide some functions of the first application. The first service widget is also referred to as a service widget of the first application.

The first service widget may be pre-installed. To be specific, the first service widget is displayed on a home screen when the terminal device is initially powered on. Alternatively, the first service widget is not pre-installed, but is added by the user to the home screen of the terminal device.

In this application, after the user uninstalls the first application on the terminal device, if the user taps the icon of the first service widget, the terminal device may display the first control when displaying the landing page of the first service widget, and then the terminal device restores the first application in response to tapping the first control by the user.

In other words, in the application restoration method provided in this application, after the user uninstalls the first application, the terminal device displays, on the landing page of the first service widget, the first control used to guide the user to restore the first application, to guide the user to restore the first application. It should be understood that, in this solution, the user can restore the first application without searching for the restoration function provided by the terminal device. Therefore, the uninstalled first application can be quickly restored.

In an implementation, in addition to displaying the landing page of the first service widget and displaying the first control, the terminal device further displays the icon of the first application, and a second control used to determine not to restore the first application.

In an implementation, the terminal device may pop up a pop-up window, also referred to as a restoration pop-up window, on the landing page, and display, in the restoration pop-up window, the first control, the second control, and the icon of the first application.

With reference to the first aspect, in an implementation, the first service widget includes first information, and the first information indicates that an application that has an association relationship with the first service widget is the first application. The method further includes: determining that an application that needs to be installed is the first application.

It should be understood that, in an existing terminal device, the first application and the service widget of the first application are independent of each other and do not affect each other. In this application, to enable the terminal device to learn, after the user taps the icon of the first service widget, that the first application needs to be restored, the first information is added to the first service widget, where the first information indicates that the application associated with the first service widget is the first application. In this way, after the user uninstalls the first application and the user taps the icon of the first service widget, the terminal device may determine, based on the first information, that the first application instead of another application needs to be restored.

In other words, in this implementation, the first service widget is improved, and the first service widget is associated with the first application, so that after the user taps the first service widget, the terminal device can find, based on the first information, the associated first application that needs to be restored.

In an example, the first information may be configured in a profile file included in the first service widget.

In an example, the first information includes an application package name of the first application.

With reference to the first aspect, in a possible implementation, the first application is a pre-installed application; and installing the first application includes: installing the first application based on an installation package of the first application stored in a read-only memory ROM partition of the terminal device.

With reference to the first aspect, in a possible implementation, the terminal device includes a first profile file, the first profile file indicates at least one service widget, and an application associated with each service widget in the at least one service widget is a pre-installed application; and installing the first application includes: installing the first application when the at least one service widget includes the first service widget.

The ROM partition of the terminal device stores some installation packages of pre-installed applications (the installation packages exist regardless of whether the pre-installed applications are uninstalled). However, for a non-pre-installed application uninstalled by the user, the terminal device does not retain an installation package of the non-pre-installed application. Therefore, in this embodiment, if only the pre-installed APP needs to be restored, and a manner in which the terminal device obtains the installation package through the server for installation is not considered, to prevent the terminal device from invalidly triggering display of the first control (or the restoration pop-up window), the first profile file is further stored in the ROM partition of the terminal device, the first profile file indicates at least one service widget, and an application associated with each service widget in the at least one service widget is a pre-installed application. Correspondingly, when the user taps the icon of the first service widget, the terminal device first determines whether the first profile file includes the first service widget. If the first profile file includes the first service widget, the terminal device determines that the application associated with the first service widget is a pre-installed application, that is, restoration can be performed. Otherwise, the terminal device does not display the first control on the landing page.

In an example, the first profile file is stored in the ROM partition of the terminal device.

With reference to the first aspect, in a possible implementation, the first information further indicates a signature certificate of the application that has the association relationship with the first service widget; and displaying the first control includes: obtaining a signature certificate of the first application from the ROM partition of the terminal device; and displaying the first control when the signature certificate indicated by the first information is successfully verified based on the signature certificate in the ROM partition.

In this implementation, the terminal device determines whether the signature certificate of the application associated with the first service widget is the same as the signature certificate of the first application stored in the ROM partition, to determine whether the restored first application is authorized. When the first application is authorized, the terminal device displays the first control used to guide the user to restore the first application.

With reference to the first aspect, in a possible implementation, displaying the landing page of the first service widget and displaying the first control includes: displaying the first control after the landing page is displayed.

With reference to the first aspect, in a possible implementation, displaying the first control includes: displaying the first control if duration between the first operation and a second operation previously entered by the user for tapping the second icon is greater than or equal to a preset duration threshold.

In this implementation, excessive disruption to the user can be reduced, to improve user experience.

With reference to the first aspect, in a possible implementation, a restoration pop-up window is displayed on the landing page, and the restoration pop-up window includes the first control and any one of the following: a second control, an application name of the first application, the icon of the first application, and a description indicating the user whether to restore the first application, where the second control indicates the terminal device not to restore the first application.

With reference to the first aspect, in a possible implementation, the method further includes: obtaining the application name of the first application and the icon of the first application from the ROM partition of the terminal device.

According to a second aspect, this application provides an application restoration apparatus. The apparatus may include function modules configured to implement the method in the first aspect. For example, the apparatus includes a display module, an uninstallation module, and an installation module. Optionally, the apparatus may further include an obtaining module and a verification module.

In some implementations, these modules may be implemented by software and/or hardware. In this implementation, the apparatus may include a processor and a transceiver. For example, the display module, the uninstallation module, the installation module, and the verification module may be implemented by the processor by executing program code stored in a memory, and the obtaining module may be implemented by the transceiver. Optionally, the apparatus may further include the memory.

According to a third aspect, this application provides a terminal device. The terminal device may include function modules configured to implement the method in the first aspect. In some implementations, these modules may be implemented by software and/or hardware.

According to a fourth aspect, this application provides a computer-readable storage medium. The computer-readable medium is configured to store program code executed by a communication apparatus, and the program code is used to implement instructions in the method in the first aspect.

According to a fifth aspect, this application provides a computer program product including instructions. When the computer program product runs on a communication apparatus, the communication apparatus is enabled to implement the method in the first aspect.

It may be understood that, for effect that can be obtained in the second aspect, the third aspect, the fourth aspect, and the fifth aspect, refer to descriptions in the first aspect. Details are not described herein.

### BRIEF DESCRIPTION OF DRAWINGS

FIG. 1 is a diagram of a structure of a terminal device according to an embodiment of this application;
FIG. 2 is a diagram of a home screen of a terminal device according to an embodiment of this application;
FIG. 3(a) to FIG. 3(d) are an existing diagram of restoring an application according to this application;
FIG. 4(a) and FIG. 4(b) are another existing diagram of restoring an application according to this application;
FIG. 5 is a schematic flowchart of an application restoration method according to an embodiment of this application;
FIG. 6 is a diagram of an interface for restoring a first application according to an embodiment of this application;
FIG. 7 is a diagram of a system architecture applicable to a method provided in this application according to an embodiment of this application;
FIG. 8 is a diagram of a process in which a first application is restored on a terminal device according to an embodiment of this application;
FIG. 9 is a diagram of performing authorization check by a terminal device according to an embodiment of this application;
FIG. 10 is a diagram of obtaining and displaying restoration pop-up window information by a terminal device according to an embodiment of this application;
FIG. 11A and FIG. 11B are a diagram of a process in which a first application is restored on a terminal device according to another embodiment of this application;
FIG. 12 is a diagram of an apparatus for restoring a first application on a terminal device according to an embodiment of this application; and
FIG. 13 is a diagram of an apparatus for restoring a first application on a terminal device according to another embodiment of this application.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

To clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

In addition, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c, where a, b, and c may be single or plural.

An application restoration method provided in embodiments of this application may be applied to a terminal device having a display function.

The terminal device in embodiments of this application may be a wearable terminal device like a mobile phone, a tablet computer, a personal computer (personal computer, PC), a smart screen, a head unit device, or a smartwatch; or may be one of various teaching auxiliary tools (for example, a learning machine and an early education machine), a smart toy, a portable robot, a personal digital assistant (personal digital assistant, PDA), an augmented reality (augmented reality, AR) device, a virtual reality (virtual reality, VR) device, or the like; or may be a device with a mobile office function, a device with a smart home function, a device with an audio and video entertainment function, a device supporting intelligent travel, or the like. It should be understood that a specific technology for and a specific device form of the terminal device are not limited in embodiments of this application.

An APP in embodiments of this application is an application (application, APP).

A service widget in embodiments of this application means that to provide convenient and intelligent service experience for a user, at least one service widget needs to be developed for each service, and needs to be easy to use and visible, intelligent and optional, and multi-end variable. A service may be understood as a provided function. For example, a search function may be considered as providing a search service for the user.

Optionally, the service widget in this application does not depend on an application, that is, the service widget and the application exist independently of each other. For example, after the user taps the service widget, when the terminal device performs display in response to an operation of tapping the service widget by the user, information required by a displayed interface is from a server instead of the application (that is, is not provided by using the application). Alternatively, from another perspective, for an application (for example, referred to as a target application) and a service widget (for example, referred to as a target service widget) provided for the target application, in this application, after the target application is uninstalled, an icon of the target service widget still exists and can provide a service.

Optionally, in some embodiments, a harmony operating system is used as an example. The service may be an atomic service (feature ability). The feature ability is a future-oriented service provision mode provided by the harmony system. It is a user program form that has an independent entry (which can be directly triggered by the user through tapping, touching, or scanning), is installation-free (which does not need to be explicitly installed and can be used after being installed by a system program framework in a background), and may provide one or more convenient services for the user.

In this application, after the user taps the icon of the service widget, a page displayed by the terminal device in response to tapping the icon of the service widget by the user is also referred to as a landing page.

Restoring an application in embodiments of this application is reinstalling an application that was installed but is uninstalled.

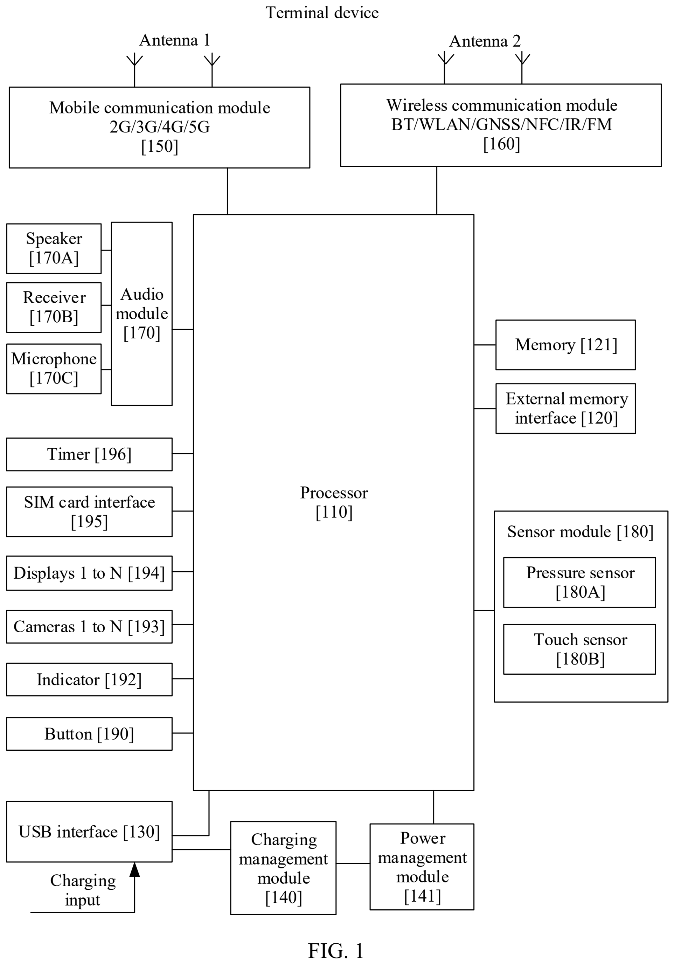

To better understand embodiments of this application, a hardware structure of the terminal device in embodiments of this application is first described. For example, FIG. 1 is a diagram of a structure of a terminal device according to an embodiment of this application.

FIG. 1 is a diagram of a structure of a terminal device. The terminal device may include a processor 110, a memory 121, a charging management module 140, a power management module 141, an antenna 1, an antenna 2, a mobile communication module 150, a wireless communication module 160, an audio module 170, a speaker 170A, a receiver 170B, a microphone 170C, a sensor module 180, a button 190, a display 194, a timer 196, and the like.

Optionally, the sensor module 180 may include a pressure sensor 180A, a touch sensor 180B, and the like.

It can be understood that, a structure illustrated in embodiments of this application does not constitute a specific limitation on the terminal device. In some other embodiments of this application, the terminal device may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and a baseband processor. Different processing units may be independent components, or may be integrated into one or more processors. A memory may also be disposed in the processor 110, and is configured to store instructions and data.

The charging management module 140 is configured to receive a charging input from the charger. The charger may be a wireless charger or a wired charger. The power management module 141 is configured to connect the charging management module 140 to the processor 110.

A wireless communication function of the terminal device may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. An antenna in the terminal device may be configured to cover one or more communication frequency bands. Different antennas may be further reused, to improve antenna utilization.

The mobile communication module 150 may provide a wireless communication solution that includes 2G/3G/4G/5G or the like and that is applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation.

The wireless communication module 160 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

In some embodiments, the antenna 1 of the terminal device is coupled to the mobile communication module 150, and the antenna 2 is coupled to the wireless communication module 160, so that the mobile phone can communicate with a network and another device by using a wireless communication technology.

The display 194 is configured to display an image, a video, and the like. The display 194 includes a display panel. In some embodiments, the terminal device may include one or N displays 194, where N is a positive integer greater than 1.

The terminal device may implement a display function through a graphics processing unit (graphics processing unit, GPU), a display 194, an application processor, or the like. The GPU is a microprocessor for image processing, and is connected to the display 194 and the application processor. The GPU is configured to: perform mathematical and geometric computation, and render an image. The GPU may also be referred to as a display core, a visual processor, a display chip, or the like.

The memory 121 may be configured to store computer-executable program code, where the executable program code includes instructions. The memory 121 may include a program storage area and a data storage area. The program storage area may store an application required by at least one function (for example, a voice playing function or an image playing function) in an operating system, and the like. The data storage area may store data (for example, audio data and contacts) and the like created when the terminal device is used.

In an example, the program storage area includes a read-only memory (read-only memory, ROM) partition, and the ROM partition may store an installation package of each pre-installed application. After the user uninstalls a pre-installed application on the terminal device, the terminal device may start an installation package that is of the pre-installed application and that is stored in the ROM partition to implement installation, so as to restore the pre-installed application.

The terminal device may implement an audio function, for example, music playing or recording, through the audio module 170, the speaker 170A, the receiver 170B, the microphone 170C, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The terminal device may be used to listen to music or answer a call in a hands-free mode over the speaker 170A. The receiver 170B, also referred to as an "earpiece", is configured to convert an electrical audio signal into a sound signal. When a call is answered or a voice message is received by using the terminal device, the receiver 170B may be put close to a human ear to listen to a voice. The microphone 170C, also referred to as a "mike" or a "mic", is configured to convert a sound signal into an electrical signal.

The pressure sensor 180A is configured to sense a pressure signal, and can convert the pressure signal into an electrical signal. In some embodiments, the pressure sensor 180A may be disposed on the display 194. When a touch operation is performed on the display 194, the terminal device may detect intensity of the touch operation through the pressure sensor 180A. The terminal device may also calculate a touch location based on a detection signal of the pressure sensor 180A. The touch sensor 180B may be disposed on the display 194, and the touch sensor 180B and the display 194 form a touchscreen, which is also referred to as a "touchscreen". The touch sensor 180B is configured to detect a touch operation performed on or near the touch sensor 180B. The touch sensor 180B may transfer the detected touch operation to the application processor to determine a type of the touch event. A visual output related to the touch operation may be provided on the display 194. In some other embodiments, the touch sensor 180B may alternatively be disposed on a surface of the mobile phone at a location different from that of the display 194.

The button 190 includes a power button, a volume button, and the like. The button 190 may be a mechanical button, or may be a touch button. The terminal device may receive a button input, and generate a button signal input related to a user setting and function control of the terminal device. The indicator 192 may be an indicator light, and may be configured to indicate a charging status and a state of charge change, or may be configured to indicate a message, a missed call, a notification, and the like. The timer 196 may be configured to record time information. For example, when recording a video, the terminal device may record start time and end time of the video, and may record duration of the recorded video.

For the terminal device shown in FIG. 1, when the terminal device is delivered from a factory, some applications (that is, some built-in applications) may be pre-installed on the terminal device. These applications are also referred to as pre-installed applications. Then, when the terminal device displays a home screen, the home screen includes icons of the pre-installed applications.

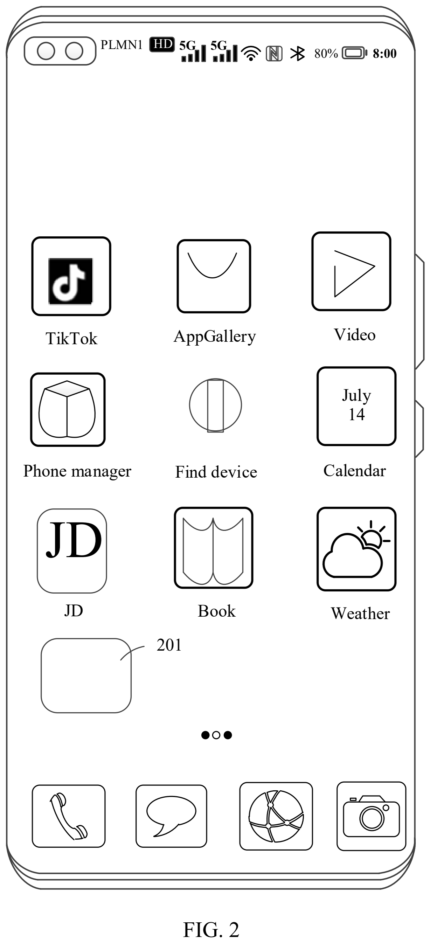

For example, the terminal device is a smartphone. When the mobile phone is delivered from a factory, a TikTok application, an AppGallery application, a Phone manager application, a Find device application, a Calendar application, a JD application, a Book application, and a Weather application are pre-installed on the mobile phone. Correspondingly, refer to FIG. 2. A home screen of the smartphone includes an icon of the TikTok application, an icon of the AppGallery application, an icon of the Phone manager application, an icon of the Find device application, an icon of the Calendar application, an icon of the JD application, an icon of the Book application, and an icon of the Weather application.

In an example, the pre-installed application may be an application of a system type.

In another example, the pre-installed application may be a third-party application. For example, the TikTok application and the JD application in FIG. 2 are third-party applications.

It should be noted that, for a pre-installed application, an installation package of the pre-installed application is stored in the ROM partition of the terminal device (the installation package exists regardless of whether the pre-installed application is uninstalled). Therefore, after a pre-installed application is uninstalled, the terminal device may perform installation by starting an installation package of the pre-installed application in the ROM partition, to restore the pre-installed application.

Optionally, in addition to the pre-installed application, the home screen of the terminal device may further include an application added by the user. As shown in FIG. 2, the home screen of the smartphone further includes a Video application downloaded by the user from AppGallery.

In this application, the home screen further includes an icon of a service widget. As shown in FIG. 2, for example, the home screen further includes an icon 201 of a service widget of the JD application, and the service widget of the JD application may provide some functions of the JD application.

In an implementation, the service widget displayed on the home screen is also pre-installed.

In another implementation, the service widget displayed on the home screen is added by the user.

The user may enter, into the terminal device, an instruction for uninstalling an application. After detecting the instruction, the terminal device uninstalls the application and deletes an icon of the application on the home screen in response to the instruction.

For example, the user touches and holds the icon of the application, the terminal device displays, in response to the touch and hold operation, a control 1 for determining to uninstall the application, and the terminal device completes uninstallation of the application in response to tapping the control 1 by the user. Alternatively, the terminal device completes uninstallation of the application in response to an uninstallation instruction entered by the user through the microphone.

In an example, the terminal device detects a tap operation, a touch and hold operation, or the like on an application icon through a pressure sensor, a touch sensor, or the like.

In a process in which the user uses the terminal device, the following scenario may exist: After the user uninstalls an application, the user expects to restore the uninstalled application. For example, after uninstalling the TikTok application on the home screen shown in FIG. 2, the user wants to restore the uninstalled TikTok application.

Therefore, how to restore the uninstalled application on the terminal device becomes a technical problem to be urgently resolved.

Currently, a first solution in which the terminal device restores the uninstalled application is as follows: A restoration entry is added to a system application "Settings" of the terminal device, to provide a capability of restoring the uninstalled application.

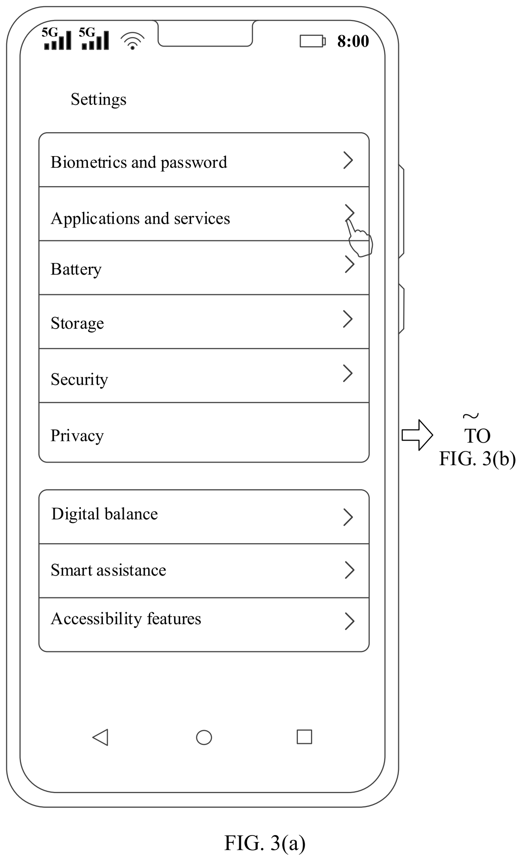

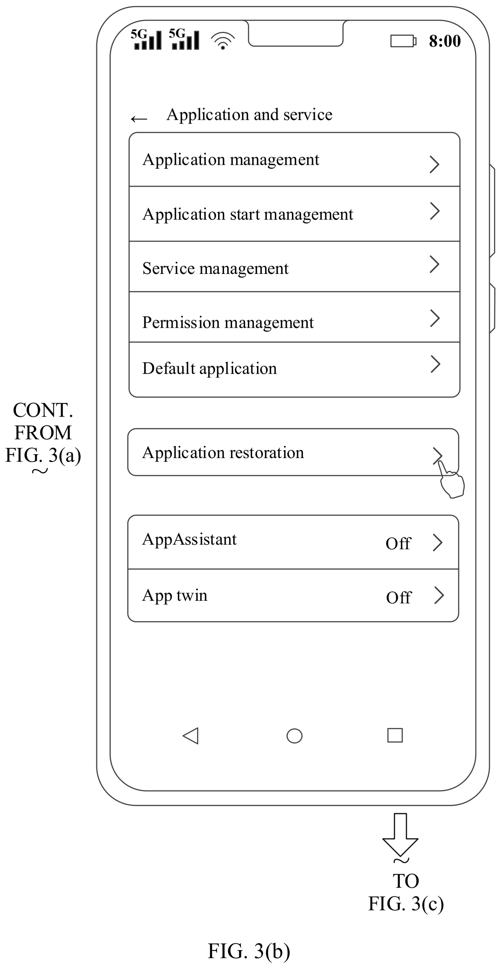

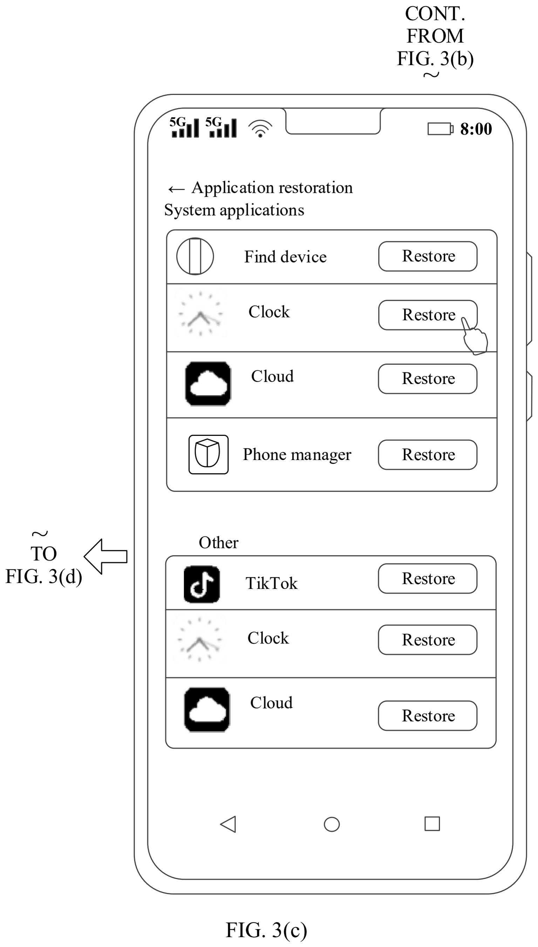

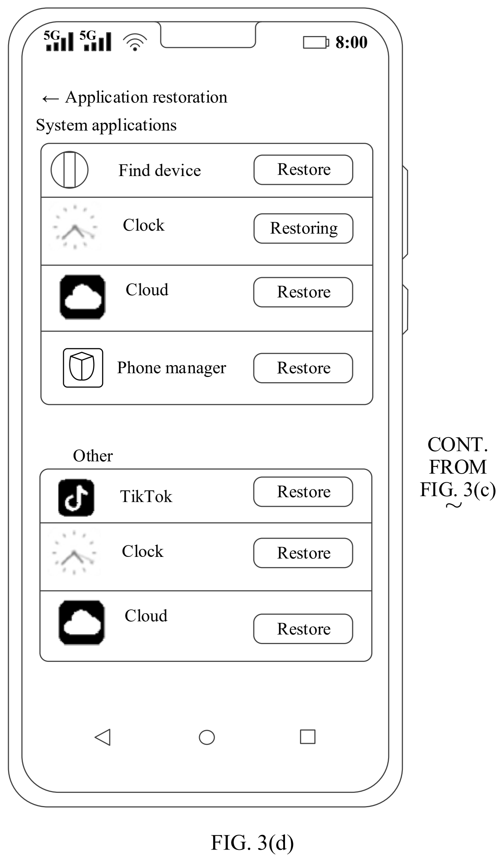

Specifically, as shown in FIG. 3(a) to FIG. 3(d), after the user taps the system application "Settings", the terminal device displays a first user interface (also referred to as a level-1 interface). The first user interface is shown in FIG. 3(a). The first user interface includes an Application and service option. The terminal device displays a second user interface (also referred to as a level-2 interface) in response to tapping the Application and service option by the user. The second user interface is shown in FIG. 3(b), and the second user interface includes an Application restoration option. The terminal device displays a third user interface (also referred to as a level-3 interface) in response to tapping the Application restoration option by the user. The third user interface is shown in FIG. 3(c). Icons, application names, and setting restoration buttons of all to-be-restored applications are displayed on the third user interface. All the to-be-restored applications displayed on the third user interface are pre-installed applications. Then, after the user taps a setting restoration button of an application (for example, a Clock application) on the third user interface, the setting restoration button displays "Restoring", as shown in FIG. 3(d).

If restoration succeeds, the name of the setting restoration button is changed to "Start", and the user may start the restored Clock application by tapping "Start". On the contrary, if the restoration fails, the terminal device outputs prompt information indicating a restoration failure.

A second solution in which the terminal device restores the uninstalled application is as follows: The terminal device provides a global search interface, to restore some applications that are built in when the terminal device is delivered from a factory and that are uninstalled.

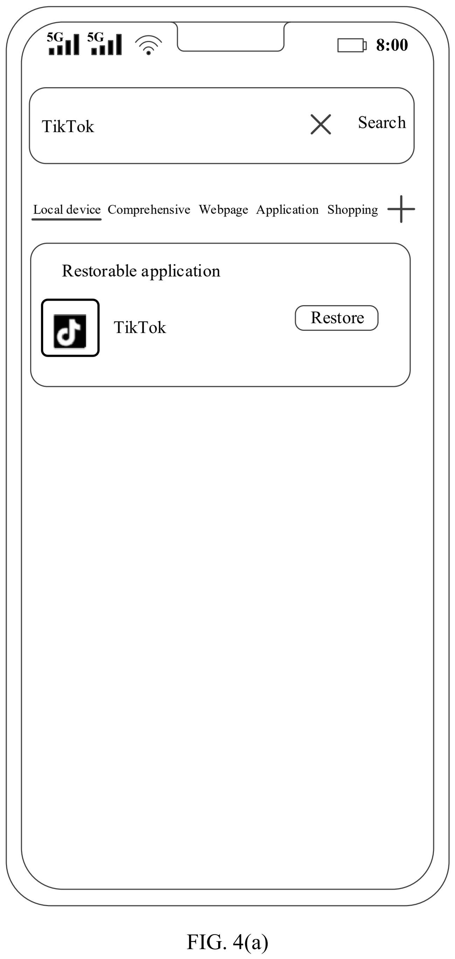

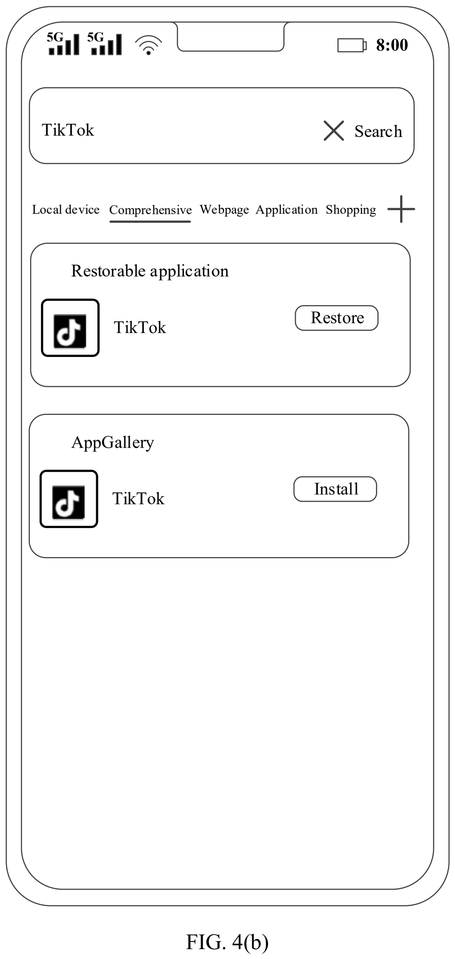

Specifically, as shown in FIG. 4(a) and FIG. 4(b), in this solution, a "Restorable application" option is added to global search: searching globally (for example, in a manner of swiping down on the home screen), entering an application name of a searched application, native & comprehensive tabs of search results, and the Restorable application option. In this solution, after the user taps the "Restore" control on the global search interface, Restoring is displayed.

Then, if the restoration succeeds, the terminal device displays "Start". The user may tap "Start" to start the restored application. If the restoration fails, the terminal device indicates that the application fails to be restored.

However, regardless of the first solution for restoring the uninstalled application or the second solution for restoring the uninstalled application, the user needs to actively perform searching, resulting in a low restoration speed. In addition, if the user is unfamiliar with the restoration function provided by the terminal device, the user cannot use the restoration function provided by the terminal device to restore the uninstalled application.

In view of this, this application provides an application restoration method and an electronic device, to quickly restore an application uninstalled by a user, so as to improve user experience.

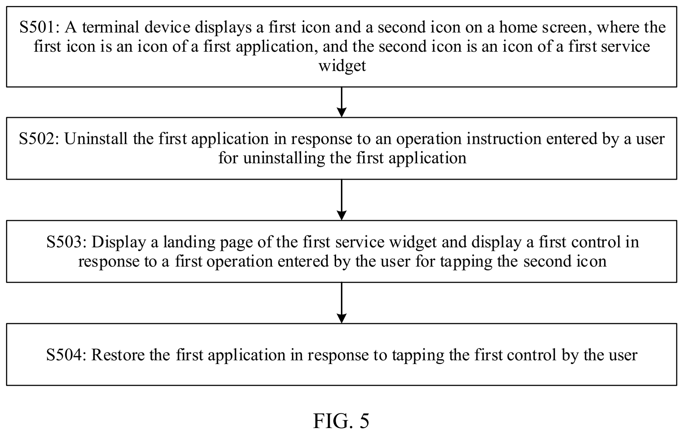

Refer to FIG. 5. A method for restoring an application on a terminal device according to this application is described. As shown in FIG. 5, the method includes the following steps.

S501: The terminal device displays a first icon and a second icon on a home screen, where the first icon is an icon of a first application, and the second icon is an icon of a first service widget.

Specifically, the first service widget may be considered as a service widget that can provide some functions of the first application. For ease of description, the first service widget is also referred to as a service widget of the first application.

In an implementation, the first service widget may be pre-installed. To be specific, the first service widget is pre-installed and displayed on the home screen when the terminal device is delivered from a factory.

In another implementation, the first service widget is not pre-installed, but is added by a user to the home screen of the terminal device.

S502: Uninstall the first application in response to an operation instruction entered by the user for uninstalling the first application.

In this embodiment, the first application and the first service widget are independent of each other and do not affect each other. To be specific, after the first application is uninstalled, the first service widget can still provide a service.

S503: Display a landing page of the first service widget and display a first control in response to a first operation entered by the user for tapping the second icon.

In this embodiment, the first control is used to determine to restore the first application.

In an example, a name of the first control is restoration. After the user taps the restoration, the terminal device restores the first application.

It should be noted that the name restoration herein is merely an example. Any function may be included in a scope of the first control in this embodiment of this application provided that the function is the same as the restoration function herein.

As described in S502, the first application and the first service widget are independent of each other and do not affect each other. Therefore, to enable the terminal device to learn, after the user taps the first service widget, that the first application is to be restored, during specific implementation, first information needs to be written into the first service widget, where the first information indicates that an application that has an association relationship with the first service widget is the first application.

In an example, the first information includes, for example, an application package name of the first application.

In an example, the application package name of the first application may be written into a profile file included in the first service widget.

Correspondingly, when the user taps the first service widget, the terminal device determines, based on the first information, that the first application needs to be restored, and then displays, on a landing page when displaying the landing page of the first service widget, the first control used to guide the user to restore the first application.

In an implementation, in addition to displaying the landing page of the first service widget and displaying the first control, the terminal device further displays the icon of the first application, a second control used to determine not to restore the first application, and a description indicating the user whether to restore the first application. Optionally, the terminal device may pop up a pop-up window, also referred to as a restoration pop-up window, on the landing page, and display, in the restoration pop-up window, the first control, the second control, the icon of the first application, and the description prompting the user whether to restore the first application.

For example, the second control is referred to as a cancel control. Similarly, cancel herein is merely a name example. Any function may be included in a scope of the second control in this embodiment of this application provided that the function is the same as the cancel function herein.

S504: The terminal device restores the first application in response to tapping the first control by the user.

In this embodiment, the first application may be a pre-installed application, or may not be a pre-installed application (for example, referred to as a non-pre-installed APP).

For example, when the first application is a pre-installed application, regardless of whether the first application is uninstalled, an installation package of the first application always exists in a read-only memory (read-only memory, ROM) partition of the terminal device, and after the terminal device is restored to factory settings and a system is re-activated, the installation package still exists in the read-only memory partition. Therefore, after the user taps the first control, in response to the operation of tapping the first control by the user, the terminal device may perform installation based on the installation package of the first application in the ROM partition, to restore the first application.

For another example, when the first application is a non-pre-installed APP, the terminal device may download the installation package of the first application from a server side, and then install the first application. In this scenario, during specific implementation, for example, the profile file included in the first service widget may further include address information or an application identifier of the installation package of the first application on an AppGallery cloud. Correspondingly, in this case, the terminal device may obtain, based on the address information or the application identifier, the installation package of the first application for installation. It should be noted that the address information and the application identifier are merely used as examples herein, and do not constitute a limitation on this application. For example, the address information and the application identifier may alternatively be other information, provided that the terminal device can obtain the installation package of the first application based on the other information.

Optionally, in this application, the terminal device may install the first application in a silent installation manner, or may not install the first application in the silent installation manner. The silent installation manner is an installation manner in which the terminal device installs the first application in a background but does not display an application installation process. In addition to silent installation, the terminal device may alternatively display an application installation process, including a percentage of the installation progress, and the like.

To be specific, in the application restoration method provided in this embodiment, after the user uninstalls the first application, the user taps the first service widget, and when displaying the landing page of the first service widget in response to the operation of tapping the first service widget by the user, the terminal device further displays, on the landing page, the first control used to guide the user to restore the first application. Then, when the user taps the first control, the terminal device installs the first application.

It can be learned that, according to the application restoration method provided in this application, the user can restore the first application without searching for the restoration function provided by the terminal device. Therefore, the uninstalled first application can be quickly restored.

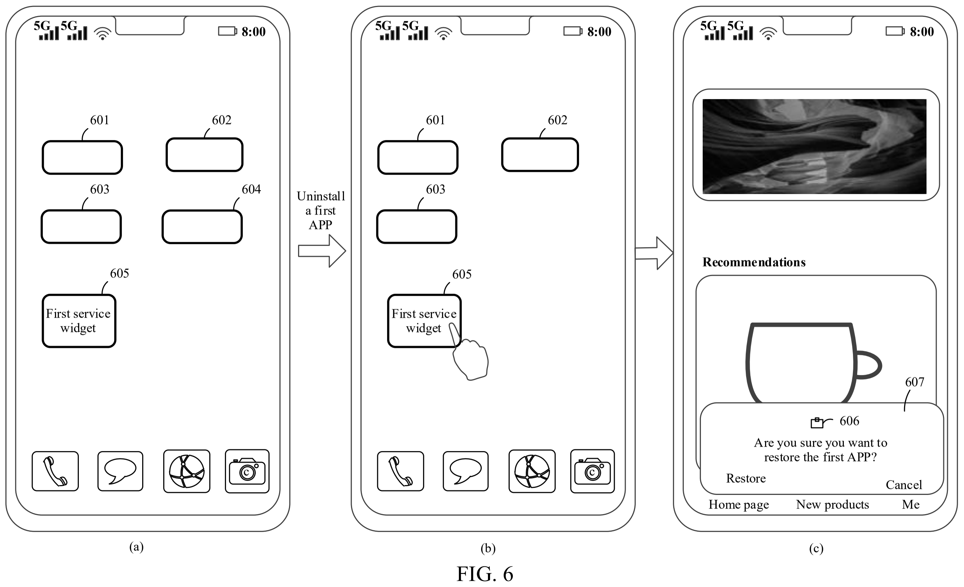

Based on the method in FIG. 5, FIG. 6 is a diagram of an interface for restoring an application according to this application. Refer to FIG. 6. The terminal device displays a home screen shown in FIG. 6(a). The home screen includes an icon 601 of an application 1, an icon 602 of an application 2, an icon 603 of an application 3, an icon 604 of the first application (also referred to as a first APP), and an icon 605 of the first service widget. For example, the first service widget may provide some sub-functions of the first application. In response to the operation instruction of the user for uninstalling the first application, the terminal device uninstalls the first application and displays the home screen shown in FIG. 6(b). After the user taps the icon 605 on the home screen shown in FIG. 6(b), the terminal device displays the landing page of the first service widget and displays a restoration pop-up window 607 on the landing page. As shown in FIG. 6(c), the restoration pop-up window 607 includes a restoration control (which may also be referred to as the first control), a cancel control (which may also be referred to as the second control), the description prompting the user whether to restore the first application, and an icon 606 of the first application.

Then, the user taps the restoration control, and the terminal device restores the first application based on the installation package of the first application. Alternatively, if the user taps the cancel control, the terminal device does not restore the first application. For an implementation in which the terminal device obtains the installation package of the first application, refer to the descriptions in the embodiment shown in FIG. 5. Details are not described herein again.

It should be understood that, in this solution, the user can restore the first application without searching for the restoration function provided by the terminal device. Therefore, the uninstalled first application can be quickly restored.

It should be noted herein that the icon of the application included on the home screen shown in FIG. 6 is merely an example, and does not constitute a limitation on this application. For example, the home screen shown in FIG. 6 may further include icons of more applications, icons of fewer applications, or icons of more service widgets.

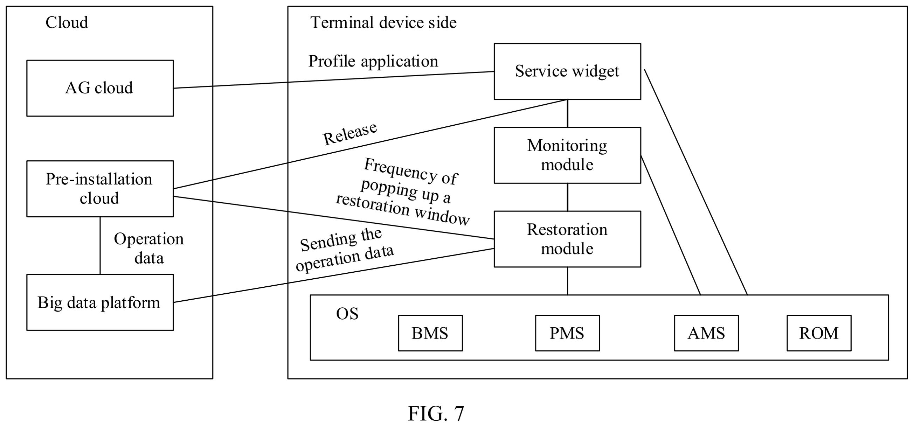

FIG. 7 is a block diagram of a software structure of an application restoration system according to an embodiment of this application. As shown in FIG. 7, this system architecture includes a cloud and a terminal device side.

The cloud includes an AppGallery (AppGallery, AG) cloud, a pre-installation cloud, and a big data platform. The terminal device side includes a service widget module, a monitoring module, a restoration module, and an operating system (operating system, OS) module.

The OS module includes a bundle manager service (Bundle manager service, BMS), a package manager service (package manager service PMS), an ability manager service (ability manager service, AMS), and a ROM.

Specifically, in this embodiment, the BMS may provide a capability of profile file information in a service widget for an obtaining module, the PMS provides a capability of installing a to-be-restored application, and the ROM provides a capability of information required for a restoration pop-up window used for restoring an application.

With reference to the diagram of the software structure shown in FIG. 7 and two detailed embodiments, the following describes how the terminal device restores a first application by using modules by using an example in which the first application that needs to be restored is a pre-installed application and the terminal device performs installation by using an installation package stored in a ROM partition.

### Embodiment 1

Precondition: An application package name of an associated first application and associated signature certificate information are written into a profile file of a first service widget corresponding to the first application. Specifically, during implementation, when developing the first service widget, a developer applies to an AG cloud for writing the application package name of the associated first application and the associated signature certificate information into the profile file of the first service widget. Correspondingly, after receiving the application, the AG cloud writes the application package name of the first application and the associated signature certificate into the profile file of the first service widget, and then the developer downloads the profile file associated with the application package name of the first application and the signature certificate, packages the profile file into the first service widget, and releases the packaged first service widget to the cloud.

For example, the packaged first service widget may be released to a pre-installation cloud in a pre-installation release manner, or may be released to a service center cloud in a service center release manner. If the pre-installation release manner is used, the first service widget is pre-installed on a terminal device. If the service center release manner is used, a user may download the first service widget from the service center cloud to the terminal device.

For example, content of the signature certificate and the application package name of the associated first application that are written into the profile file of the first service widget is as follows:

```
              "Information about the associated application": {
              "Application package name": " *****",
            "signature certificate ": "********",
          }.
```

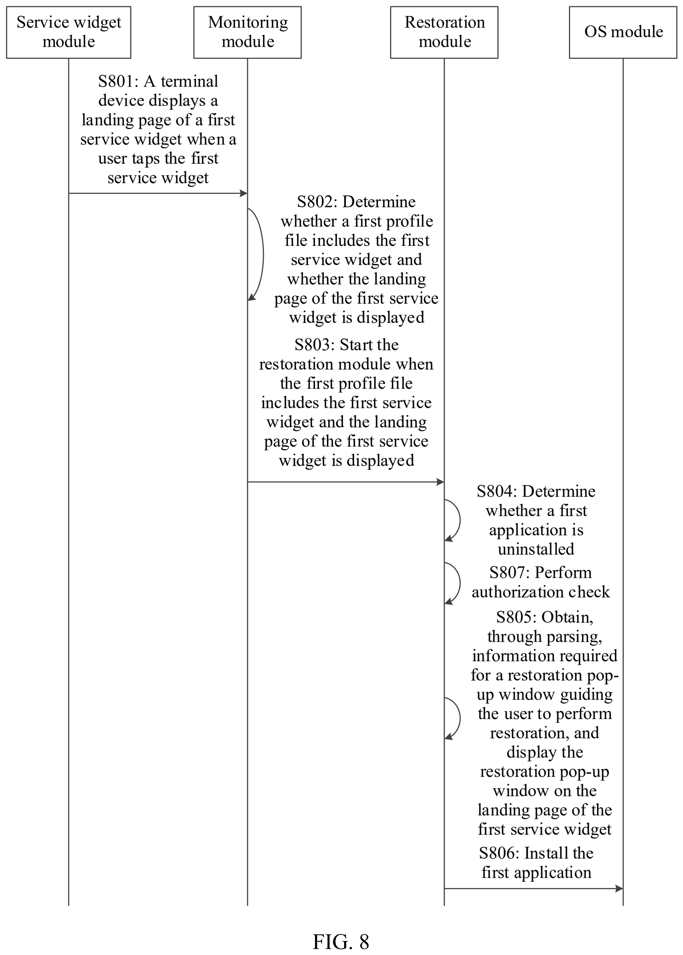

After the foregoing precondition is met, as shown in FIG. 8, a method for restoring the pre-installed first application in this embodiment includes the following steps.

S801: The terminal device displays a landing page of the first service widget in response to tapping the first service widget by the user.

S802: A monitoring module determines whether a first profile file includes the first service widget and whether the landing page of the first service widget is displayed, and performs S803 if the first profile file includes the first service widget and the landing page of the first service widget is displayed.

For example, if it is detected that the landing page of the first service widget is in a resume state, it is determined that display of the state of the landing page of the first service widget is completed.

In this embodiment, the first profile file indicates at least one service widget, and an application associated with each service widget in the at least one service widget is a pre-installed application.

A ROM partition of the terminal device stores some installation packages of pre-installed applications (the installation packages exist regardless of whether the pre-installed applications are uninstalled), and after an installation package downloaded by the user is uninstalled, the terminal device does not retain the installation package downloaded by the user. Therefore, if the manner in which the terminal device obtains the installation package through the server for installation is not considered, when the terminal device restores an associated application by using a service widget, only the pre-installed application can be restored. Therefore, in this embodiment, the first profile file is configured in the ROM partition of the terminal device, and the first profile file indicates the at least one service widget. Correspondingly, when the user taps an icon of the first service widget, the terminal device performs S803 when determining that the first profile file includes the first service widget; otherwise, the terminal device determines not to install the first application.

In an example, a profile file restore_fa_list.xml (the name herein is merely an example, and does not constitute a limitation on this application) may be newly added to a pre-installation package stored in the ROM partition. The profile file restore_fa_list.xml includes a package name of the at least one service widget and an application package name of an application associated with each service widget.

It should be understood that, in this manner, resource consumption of the terminal device can be reduced. For example, if an application associated with a profile file of a service widget is not a pre-installed application, for example, is referred to as a third application, and the terminal device does not configure the first profile file, when determining that the third application needs to be restored, the terminal device performs a process of obtaining, from the ROM partition, information about a restoration pop-up window used to guide the user to restore the third application and obtaining an installation package of the third application from the ROM partition. It should be understood that, in this case, the terminal device cannot obtain the information about the restoration pop-up window used to guide the user to restore the third application and the installation package of the third application. However, if the second information is configured, the terminal device may determine not to restore the third application, and therefore does not perform a process of obtaining the information of the restoration pop-up window used to guide the user to restore the third application and obtaining the installation package of the third application from the ROM partition. In this way, resource consumption of the terminal device can be reduced.

S803: The monitoring module starts a restoration module based on a package name of the first service widget and the application package name of the associated first application.

For example, the monitoring module starts the restoration module by using StartService (bundleName, relatedBundleName).

S804: The restoration module determines whether the to-be-restored first application is uninstalled, and performs S805 if the to-be-restored first application is uninstalled.

During specific implementation, the terminal device may determine, through a PMS interface, whether the to-be-restored first application is uninstalled.

S805: The restoration module obtains, through parsing from an installation package of the first application included in the ROM partition, information required for the restoration pop-up window guiding the user to perform restoration, and displays the restoration pop-up window on the landing page of the first service widget.

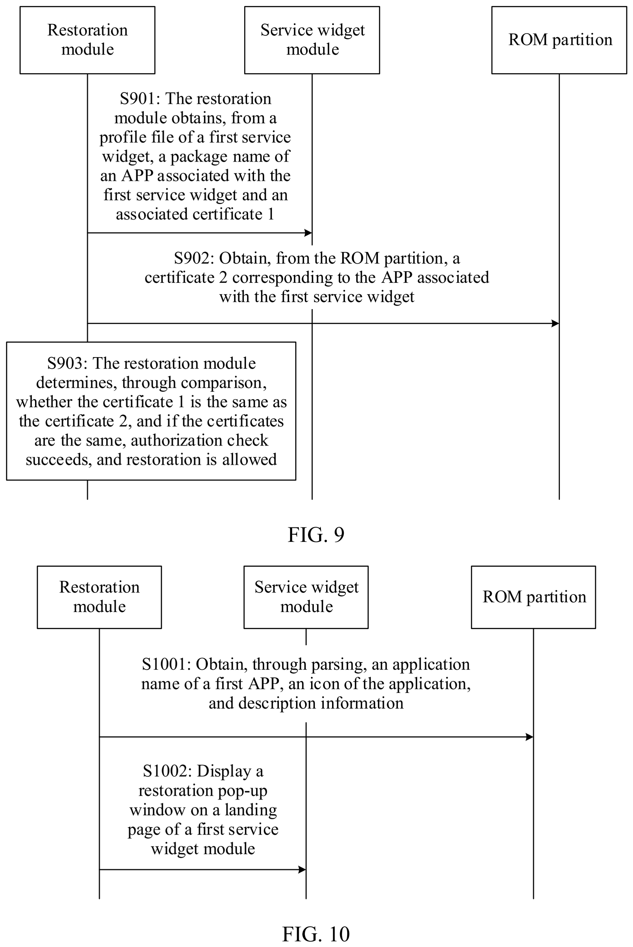

In an example, as shown in FIG. 10, the restoration module performs S1001 and S1002: obtaining, through parsing, an application name of the first application, an icon (ICON) of the application, and description information from the ROM partition, and then when the landing page of the first service widget is displayed, popping up the restoration pop-up window used to restore the first application, to guide the user to perform restoration.

S806: The restoration module installs the first application in response to the user tapping a control indicating the terminal device to restore the first application.

Further, if the restoration fails, information indicating a restoration failure is output.

For example, the restoration module invokes a first application installation capability of the PMS module to perform installation.

In an optional embodiment, a signature certificate (for example, referred to as a certificate 1) of an associated application may be further configured in the profile file of the first service widget. Correspondingly, before S805, S807 further needs to be performed: checking authorization of the first application restored by using the first service widget. Then, S805 is performed when it is determined that the first application is authorized.

Specifically, when the restoration module checks the authorization of the to-be-restored first application, as shown in FIG. 9, the following steps are included. S901: The restoration module obtains a package name and the signature certificate (for example, referred to as the certificate 1) of the associated application from the profile file of the first service widget. S902: The restoration module obtains, from the ROM partition, a signature certificate (for example, referred to as a certificate 2) corresponding to the application associated with the first service widget. S903: The restoration module determines, through comparison, whether the certificate 1 is the same as the certificate 2, and if the certificates are the same, authorization check succeeds.

### Embodiment 2

In this embodiment, when an uninstalled first application is restored by using a first service widget, a pop-up frequency of a restoration pop-up window is further controlled, to avoid excessive disruption to a user, so as to further improve user experience.

Specifically, a precondition of this embodiment is the same as that of this embodiment, and details are not described herein again.

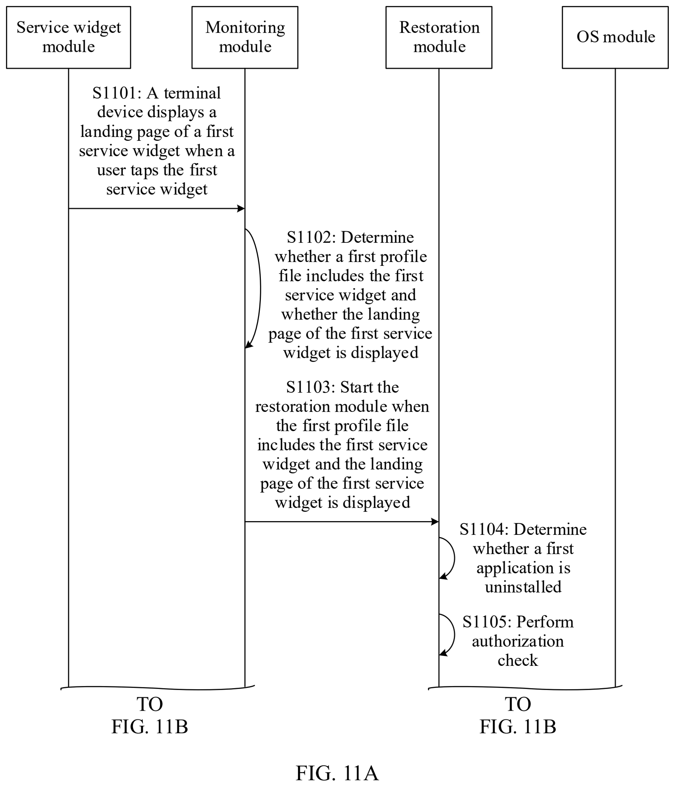

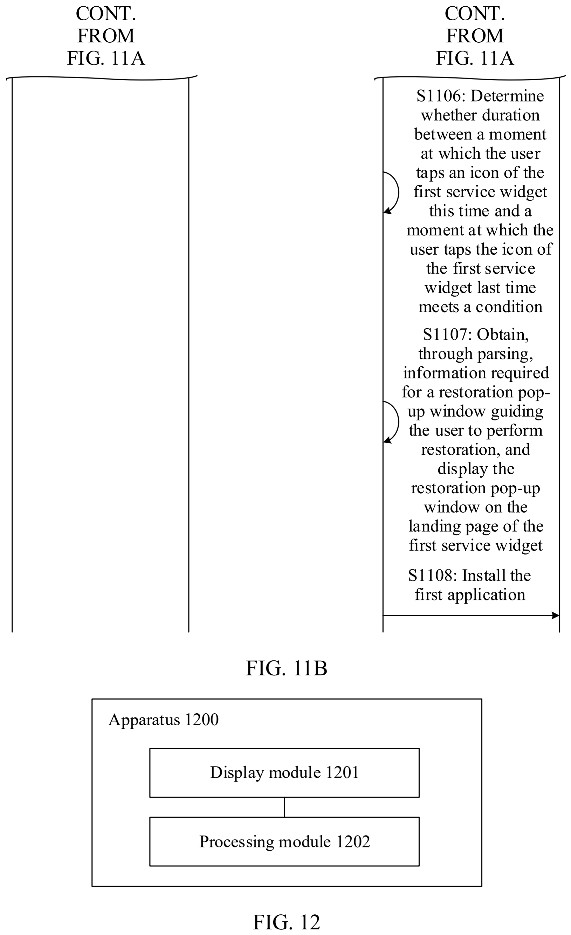

When the precondition is met, as shown in FIG. 11A and FIG. 11B, the method includes the following steps.

S1101: A terminal device displays a landing page of the first service widget in response to tapping the first service widget by the user.

S1102: A monitoring module determines whether a first profile file includes the first service widget and whether the landing page of the first service widget is displayed, and performs S1103 if the first profile file includes the first service widget and the landing page of the first service widget is displayed.

S1103: The monitoring module starts a restoration module based on a package name of the first service widget and an application package name of an associated first application.

S1104: The restoration module determines whether the to-be-restored first application is uninstalled, and performs S1105 if the first application is uninstalled.

S1105: Check authorization of restoring the first application by using the first service widget. If check succeeds, S1106 is performed.

For a process of each step in S1101 to S1105, refer to descriptions of a related part in FIG. 8. Details are not described herein again.

S1106: The restoration module determines whether duration between a moment at which an icon of the first service widget is tapped this time and a moment at which the icon of the first service widget is tapped last time meets a condition. If the condition is met, S1107 is performed.

During implementation, the following steps are included: (1) The restoration module sends, to a big data platform on a cloud, some data generated when the user performs operations on the restoration pop-up window, for example, data indicating that the user taps to cancel the restoration pop-up window, data indicating that the user presses a home button to exit the restoration pop-up window, data indicating that the user exits the restoration pop-up window, and data indicating time at which the restoration pop-up window is exited. (2) The big data platform processes the user data sent by the terminal device. (3) The big data platform sends processed user data of the terminal device to a pre-installation cloud. (4) The pre-installation cloud determines first duration based on an identifier of the terminal device, for example, a device identifier UDID. (5) Send the UDID of the terminal device to the pre-installation cloud to request the first duration of the terminal device. (6) Determine whether the first duration and the duration between the moment at which the icon of the first service widget is tapped this time and the moment at which the icon of the first service widget is tapped last time meet a preset requirement. For example, if first duration of a UDID obtained from the pre-installation cloud by the user uploading the UDID ******* is seven days, it indicates that if it has been at least seven days since the restoration pop-up window is displayed last time, and a restoration condition is met, the restoration pop-up window is allowed to pop up again only when the user taps the icon of the first service widget.

S1107: The restoration module obtains, through parsing from an installation package of the first application in a ROM partition, information required for the restoration pop-up window guiding the user to perform restoration, and displays the restoration pop-up window on the landing page of the first service widget.

S1108: The restoration module installs the first application in response to the user tapping a control indicating the terminal device to restore the first application.

For detailed descriptions of S1108, refer to descriptions of S806, and details are not described herein again.

The foregoing describes a method for specifically restoring, by the terminal device, the uninstalled pre-installed APP by using the service widget.

It should be noted that the service widget may alternatively be replaced with, for example, a second application, and then the uninstalled first application is restored by associating the second application with the first application.

To be specific, after the service widget is replaced with the second application, the method includes: displaying an icon of the first application and an icon of the second application on a home screen; uninstalling the first application in response to an operation instruction of the user for uninstalling the first application; displaying a landing page of the second application and displaying a first control on the landing page of the second application in response to tapping the icon of the second application by the user, where the first control is used to determine to restore the first application; and restoring the first application in response to tapping the first control by the user.

Similarly, the second application and the first application are independent of each other. In other words, after the first application is uninstalled, the icon of the second application still exists.

Further, the second control may alternatively be displayed, and the first application is not restored in response to tapping the second control by the user.

Optionally, the terminal device may not display the first control and the second control on the landing page of the second application, but after determining that the first application is uninstalled, if the user taps the icon of the second application, perform installation when the landing page of the second application is displayed. To be specific, in this manner, the method includes: displaying the icon of the first application and the icon of the second application on the home screen; uninstalling the first application in response to the operation instruction of the user for uninstalling the first application; and restoring the first application in response to tapping the icon of the second application by the user.

Optionally, when the first application is restored by using the second application, the second application includes first information, and the first information indicates that an application associated with the second application is the first application; and the method further includes: determining, based on the first information, that an application that needs to be restored is the first application.

Optionally, the first application is a pre-installed application.

Optionally, when the first application is restored by using the second application, second information is stored in the read-only memory ROM partition of the terminal device, the second information indicates at least one application, and an application associated with each service widget in the at least one application is a pre-installed application. Correspondingly, displaying the first control on the landing page includes: displaying the first control on the landing page when the second application is included in the at least one application and the landing page of the second application is displayed.

Optionally, when the first application is restored by using the second application, the first information further indicates a signature certificate of the application associated with the second application, and the method further includes: displaying the first control on the landing page further including: obtaining, from the ROM partition based on the application package name of the first application, a first signature certificate corresponding to the application package name of the first application; and when the first signature certificate is the same as the signature certificate indicated by the first information, displaying the first control and the second control on the landing page.

FIG. 12 is a diagram of an application restoration apparatus according to an embodiment of this application. As shown in FIG. 12, the application restoration apparatus 1200 includes a display module 1201 and a processing module 1202.

In an example, the display module 1401 may be configured to display a first icon and a second icon on a home screen (S501), and display a landing page of a first service widget and display a first control (S503).

In an example, the processing module 1202 may be configured to perform an operation of uninstalling a first application and an operation of installing the first application (S502).

In another example, the processing module 1202 may be configured to perform authorization check (S806).

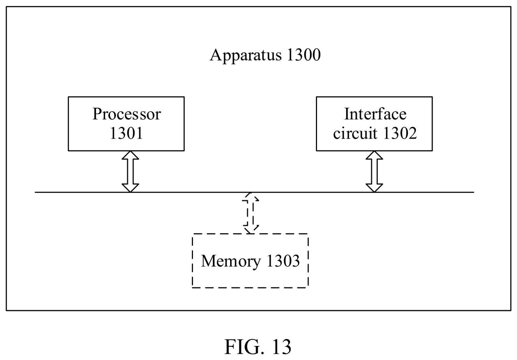

FIG. 13 is a diagram of an application restoration apparatus according to another embodiment of this application. As shown in FIG. 13, a processing apparatus 1300 may include a processor 1301 and an interface circuit 1302. The processor 1301 and the interface circuit 1302 are coupled to each other. It may be understood that the interface circuit 1302 may be a transceiver or an input/output interface. Optionally, the processing apparatus 1300 may further include a memory 1303, configured to store instructions executed by the processor 1301, or store input data required by the processor 1301 to run the instructions, or store data generated after the processor 1301 runs the instructions.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be disposed in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An application restoration method, applied to a terminal device, and comprising:
displaying a first icon and a second icon on a home screen of the terminal device, wherein the first icon is an icon of a first application, and the second icon is an icon of a first service widget;
uninstalling the first application in response to an operation instruction entered by a user for uninstalling the first application;
displaying a landing page of the first service widget and displaying a first control in response to a first operation entered by the user for tapping the second icon; and
installing the first application in response to tapping the first control by the user.

2. The method according to claim 1, wherein the first service widget comprises first information, and the first information indicates that an application that has an association relationship with the first service widget is the first application; and
the method further comprises:
determining that an application that needs to be installed is the first application.

3. The method according to claim 2, wherein the first application is a pre-installed application; and
installing the first application comprises:
installing the first application based on an installation package of the first application stored in a read-only memory ROM partition of the terminal device.

4. The method according to claim 3, wherein the terminal device comprises a first profile file, the first profile file indicates at least one service widget, and an application associated with each service widget in the at least one service widget is a pre-installed application; and
installing the first application comprises:
installing the first application when the at least one service widget comprises the first service widget.

5. The method according to claim 4, wherein the first profile file is stored in the read-only memory ROM partition of the terminal device.

6. The method according to any one of claims 2 to 5, wherein the first information further indicates a signature certificate of the application that has the association relationship with the first service widget; and
displaying the first control comprises:
obtaining a signature certificate of the first application from the ROM partition of the terminal device; and
displaying the first control when the signature certificate indicated by the first information is successfully verified based on the signature certificate in the ROM partition.

7. The method according to any one of claims 1 to 6, wherein displaying the landing page of the first service widget and displaying the first control comprises:
displaying the first control after the landing page is displayed.

8. The method according to any one of claims 1 to 7, wherein displaying the first control comprises:
displaying the first control if duration between the first operation and a second operation previously entered by the user for tapping the second icon is greater than or equal to a preset duration threshold.

9. The method according to any one of claims 3 to 8, wherein a restoration pop-up window is displayed on the landing page, and the restoration pop-up window comprises the first control and any one of the following: a second control, an application name of the first application, the icon of the first application, and a description indicating the user whether to restore the first application, wherein the second control indicates the terminal device not to restore the first application.

10. The method according to claim 9, wherein the method further comprises:
obtaining the application name of the first application and the icon of the first application from the ROM partition of the terminal device.

11. An application restoration apparatus, comprising a functional module configured to implement the method according to any one of claims 1 to 10.

12. An application restoration apparatus, comprising a memory and a processor, wherein
the memory is configured to store program instructions; and
the processor is configured to execute the program instructions in the memory to implement the method according to any one of claims 1 to 10.

13. A terminal device, comprising the apparatus according to claim 11 or 12.

14. A computer-readable storage medium, wherein the computer-readable storage medium stores program code used by a computer for execution, and the program code comprises instructions used for implementing the method according to any one of claims 1 to 10.

15. A computer program product, wherein the computer program product comprises instructions used for implementing the method according to any one of claims 1 to 10.
